(19) Europäisches Patentamt
European Patent Office
Office européen des brevets

(11) Numéro de publication: **0 011 515**
**A1**

(12) **DEMANDE DE BREVET EUROPEEN**

(21) Numéro de dépôt: **79400580.1**

(22) Date de dépôt: **21.08.79**

(51) Int. Cl.³: **C 09 K 17/00**
B 01 F 17/16, C 11 D 1/00

(30) Priorité: **13.09.78 FR 7826355**

(43) Date de publication de la demande:
**28.05.80 Bulletin 80/11**

(84) Etats Contractants Désignés:
**BE DE GB IT NL**

(71) Demandeur: **C E C A S.A.**
**11, Avenue Morane Saulnier**
**F-78140 - Velizy Villacoublay(FR)**

(72) Inventeur: **Blet, Claude**
**35, rue de la Rangée**
**F-92380 Garches(FR)**

(74) Mandataire: **Petit, Alain et al,**
**OFFICE JOSSE & PETIT 126 Boulevard Haussmann**
**F-75008 Paris(FR)**

(54) **Perfectionnement aux compositions pour la stabilisation des sols.**

(57) Composition pour la stabilisation des sols à base d'une mono-amine en C8 à C22 salifiée par un acide, et solubilisée dans un mélange d'au moins trois solvants appartenant chacun à un des quatre groupes de solvants suivants :
- mono-amines en C12 à C22 éthoxylées ou propoxylées ;
- polyéthylène glycols de poids moléculaire compris entre 200 et 600 ;
- alcools normaux ou iso du groupe des alcools méthylique, éthylique, propylique et butylique ;
- eau.

EP 0 011 515 A1

Croydon Printing Company Ltd.

Perfectionnement aux compositions pour la stabilisation des sols

L'invention concerne une composition pour la stabilisation des sols, se présentant sous forme liquide et se dispersant facilement dans l'eau pour sa mise en oeuvre.

Des routes, chemins, pistes cyclables, sentiers piétonniers, allées de parcs et jardins, voies d'accès aux chantiers de génie civil ou forestiers, chemins de halage de canaux, parkings, etc., ne peuvent être revêtus de couches de roulement en béton hydraulique ou en enrobés à base de liants bitumineux pour diverses raisons, et en particulier :

- parce que l'on veut conserver au sol son aspect naturel pour des raisons esthétiques ;

- parce que le caractère intermittent du trafic automobile ne justifie pas économiquement le coût élevé d'un revêtement.

Dans la plupart des cas, les sols constituant ces voies de circulation ont de bonnes qualités géotechniques : leur teneur limitée en argile et leur courbe granulométrique continue permettent, après un bon compactage, d'obtenir une portance et une cohésion acceptables pour un trafic intermittent. Malheureusement, quelques mois par an, cette portance disparaît,

dès que la teneur en eau dépasse une certaine teneur dénommée "OPTIMUM PROCTOR". Le sol se détrempe, perd sa cohésion et les qualités de portance naturelle disparaissent complètement. Un orniérage important apparaît et toute circulation pédestre, cycliste ou automobile devient difficile ou impossible.

La teneur "OPTIMUM PROCTOR" est la teneur en eau optimale d'un sol pour lequel sa densité sèche passe par un maximum. Elle se mesure notamment selon le mode opératoire de la norme British Standard 1924-1975, paragraphe 3-3.

De nombreuses solutions ont été proposées pour diminuer cette sensibilité à l'eau, en particulier par l'incorporation de produits chimiques apportant une hydrophobation au sol.

Parmi ces produits, les tensio-actifs cationiques du type amine aliphatique, de formule générale $R - NH_2$, où R est une chaîne hydrocarbonée de 12 à 22 atomes de carbone, apportent une modification remarquable du comportement des sols vis-à-vis de l'eau.

En s'adsorbant sur les surfaces minérales par leur groupe polaire électropositif, ils provoquent une hydrophobie instantanée et irréversible de leur support par modification de la tension interfaciale eau/minéral.

Ces produits cationiques réagissent également avec les argiles par échange des cations sodium et calcium superficiels pour former des argiles organophiles insensibles à l'eau.

Cette propriété d'hydrophobation par adsorption sur les surfaces a été largement mise en profit dans de nombreux domaines :

- inhibition de la corrosion acide des surfaces d'acier ;

- adhésivité des bitumes sur les matériaux utilisés dans les

revetements routiers ;

- flottation des minerais.

L'utilisation des tensio-actifs cationiques dans le traitement des sols est connue par le brevet français n° 1 195 349 ; elle a fait aussi l'objet d'études de laboratoires ayant donné lieu à des compte-rendus parmi lesquels on peut notamment citer :

- J.M. HOOVER et D.T. SAVIDSON : Organic cationic chemicals as stabilizing agent for Iowa loess - Bulletin n° 129 HRB ; Chemical and mechanical stabilization ;

- M. BOUCHE : Mouvement de l'eau dans les sols fins compactés ; action d'un produit hydrophobant. Annales de l'Institut Technique du bâtiment et des Travaux Publics, série sols et fondations n° 119, 14 janvier 1975.

Ces études montrent que des quantités faibles de tensio-actifs cationiques, de l'ordre de 0,05 à 0,5 % hydrophobent les sols argileux et leur confèrent une imperméabilisation qui permettrait la circulation de véhicules pendant les saisons pluvieuses.

Malheureusement, cette technique très remarquable n'a pu que très rarement être mise en pratique. En effet, la mise en oeuvre de ces produits cationiques présente quelques difficultés :

Pour mélanger intimement 0,05 à 0,5 % en poids du produit avec un sol fin, il est nécessaire de le diluer, de préférence dans l'eau, afin d'avoir une répartition homogène.

La solution aqueuse du produit ne doit pas être trop visqueuse pour pouvoir être pulvérisée aisément sur le sol à traiter.

De plus, la quantité d'eau de dilution doit être adaptée à la

teneur en eau naturelle du sol au moment du traitement afin qu'après traitement on atteigne sans la dépasser la teneur en eau OPTIMUM PROCTOR.

Par exemple, si la teneur en eau OPTIMUM PROCTOR du sol à traiter est de 12 % et si, au moment de la mise en oeuvre, le pourcentage contenu dans ce sol est de 10 %, il sera nécessaire de rajouter au maximum 2 % d'eau en même temps que le produit tensio-actif cationique. On réalisera donc une dispersion dans l'eau du produit à environ 10 % que l'on devra pulvériser sur le sol.

Si, au contraire, la teneur en eau du sol, au moment de la mise en oeuvre, est de 11 %, il ne faudra rajouter que 1 % d'eau maximum et on réalisera alors une dispersion aqueuse de tensio-actif cationique à 20 %.

Pour pouvoir être réalisée commodément, l'hydrophobation des sols par ces produits cationiques doit donc être faite par l'intermédiaire de dispersions ou solutions aqueuses peu visqueuses contenant des quantités variables d'eau et de produits correspondant aux conditions d'humidité du chantier au moment de la mise en oeuvre. Ces dispersions ou solutions aqueuses peu visqueuses doivent également pouvoir être réalisées avec de l'eau contenant du chlorure de calcium ; ce chlorure de calcium ayant pour but de maintenir les sols, dans des climats chauds et secs, à une teneur en eau suffisante pour qu'ils conservent leur cohésion.

Afin d'obtenir facilement les dispersions ou solutions aqueuses, il convient que ces tension-actifs se présentent sous forme liquide et leur dispersion aqueuse doit pouvoir être réalisée très aisément dans les conditions de chantier : le produit doit être autodispersible dans l'eau sans que des moyens mécaniques importants soient nécessaires.

La demanderesse a trouvé qu'il était possible d'obtenir ces conditions par l'utilisation de compositions :

- qui se présentent sous forme de liquides fluides, non thixotropiques, coulables ou pompables à température ordinaire ;

- qui forment avec l'eau, dans des proportions de 5 à 50 % et de préférence de 20 à 40 %, des dispersions fines pulvérisables, réalisables aisément par simple agitation par des moyens mécaniques simples. Les formulations autodispersibles sont préférées bien que l'autodispersibilité ne constitue pas une limite de l'invention.

Ces formulations sont utilisables de préférence pour l'hydrophobation des sols pour lesquels on désire, pour des raisons esthétiques, conserver l'aspect naturel d'origine, sans modification de l'aspect, de la couleur et de la granulométrie superficielle. Cette application particulière ne représente pas, toutefois, une limitation de l'invention qui peut également être appliquée dans tous les cas où l'on veut que le sol conserve, quelles que soient les conditions de pluviosité, la portance nécessaire à une circulation aisée.

La demanderesse, et ceci constitue l'invention, a trouvé que :

les sels de mono-amines grasses primaires, secondaires ou tertiaires de formules générales :

$$R - NH_3^+, X^-$$

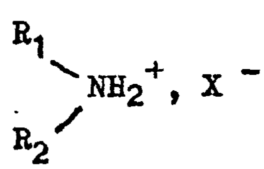

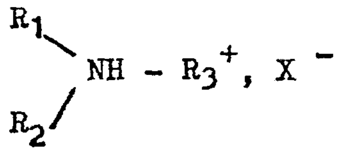

où R, $R_1$ $R_2$ sont des radicaux hydrocarbonés de 8 à 22 atomes de carbone, mais de préférence 16 à 18 et où $X^-$ est un anion tel que chlorure, sulfate, phosphate, chloracétate, acrylate, acétate, mais de préférence acétate, se solubilisent seuls ou en mélange dans des mélanges de solvants judicieusement choisis, à des concentrations élevées, de 10 à 70 %, en donnant des compositions liquides stables qui forment dans l'eau les dispersions fines recherchées.

Des résultats similaires peuvent être également obtenus avec :

- les polyamines de formule générale

$$R - (NH - (CH_2)_n)_p\ NH_2^+,\ (p + 1)\ X^-$$

où R et X sont définis comme ci-dessus et

n est compris entre 1 et 6

p est compris entre 1 et 4

- et les sels d'ammonium quaternaire, de formule générale

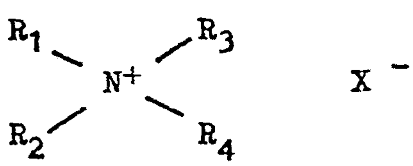

où $R_1$ et/ou $R_2$ sont des chaînes hydrocarbonées de 12 à 22 atomes de carbone, où $R_3$ est un radical méthyl, benzyl ou hydroxyéthyl et $R_4$ un radical méthyl, et

où $X^-$ est un anion chlorure ou sulfate.

Cependant, ces produits paraissent économiquement moins intéressants et donner de moins bons résultats.

Les solvants comprennent l'eau et :

- des composés polaires à groupements alcools, en particulier les mono-alcools de C1 à C7 et plus particulièrement les suivants :
  - méthanol
  - éthanol
  - n-propanol
  - iso-propanol
  - n-butanol
  - iso-butanol
- les polyéthylène glycols de poids moléculaires compris entre 200 et 600 ;
- les alkyl-amino-polyéthoxyéthanols appelés aussi amines éthoxylées et les alkyl-amino-polypropoxypropanols appelés aussi amines propoxylées, à 7 à 25 moles d'oxyde d'éthylène ou de propylène pour 1 mole d'amine.

Il est ainsi possible de mettre sous forme liquide des sels d'amines, notamment des acétates, qui sont solides, et d'obtenir des solutions auto-dispersibles.

Les mono-amines aliphatiques les plus couramment utilisées, parmi les amines en C8-C22, sont les amines en C16-C18 sous forme de sels plus particulièrement d'acétate. Ces sels rentrent à raison de 10 à 70 % dans la formulation, et de préférence environ 60 %.

Ces amines peuvent être issues de l'hydrogénation de nitriles gras préparés à partir des acides gras de coprah, de suif,

d'oléine, de suif hydrogéné, etc., ou de sources pétrochimiques.

Il a été trouvé que, pour obtenir une composition liquide aisément dispersible, il convenait d'utiliser comme mélange solvant au moins trois des quatre solvants indiqués :

- eau
- alcools
- polyéthylène glycols
- amines éthoxylées.

Ces solvants, lorsqu'ils sont utilisés, le sont à des teneurs comprises entre :

- 10 à 40 % pour les alcools
- 2 à 20 % pour les polyéthylèneglycols
- 0,1 à 10 % pour les amines éthoxylées.

Le tableau 1 donne les caractéristiques d'un certain nombre de formules qui ont été expérimentées.

On constate que les formules 3, 7 et 11 à deux solvants seulement ont une solubilité longue et difficile.

La mesure de la viscosité de la solution aqueuse est intéressante en ce sens qu'une faible viscosité assure une meilleure utilisation dans les appareils, mais c'est une caractéristique moins importante que la solubilité qui est donnée ici à titre indicatif. Elle n'est pas forcément moins bonne pour les formules à deux solvants et ne peut donc être prise en considération pour représenter un avantage de l'invention.

Toutes ces formules ont été expérimentées sur des sols réels.

L'efficacité du traitement a été contrôlée selon la méthode proposée par M. BOUCHE (voir référence plus haut et "Contribution à l'étude des propriétés hydrauliques et mécaniques des sols fins compactés. Application à l'action des produits hydrophobants", thèse de doctorat d'Etat, Université de Paris VI, 1974.

Ces essais ont été faits sur des éprouvettes de sol (type sol-ciment : élancement 2) compactées à une teneur en eau correspondant à l'Optimum Proctor. Des éprouvettes de sol traité et non traité ont été moulées. Elles ont ensuite été amenées à l'état sec par passage à l'étuve à 80°C jusqu'à poids constant.

Ces éprouvettes ont ensuite été soumises à des remontées capillaires et l'on a mesuré la quantité d'eau requise en fonction du temps.

On a mesuré la qualité du sol (hydrophobé ou non) par sa diffusibilité moyenne D à partir de la formule :

$$Q = \frac{2}{\sqrt{\pi}} (\theta_s - \theta_o) \sqrt{\bar{D} . t} \quad \text{où :}$$

Q est la reprise en eau par unité de surface d'éprouvette et $\theta_s$ et $\theta_o$ sont les teneurs en eau volumique respectivement initiale et à saturation.

L'efficacité du traitement est exprimée par :

$$E = 100 \frac{\overline{D_o} - \bar{D}}{\overline{D_o}}$$

où $\overline{D_o}$ est le coefficient de diffusibilité moyenne de l'éprouvette de sol témoin

et $\bar{D}$ le coefficient de diffusibilité moyenne de l'éprouvette de sol traité.

Les résultats sont donnés dans le tableau 2. Chaque formule a été essayée dans des conditions différentes de sol et de dose ; les résultats ne sont donc pas comparables, mais les essais avaient pour but de vérifier que les formules avaient une bonne efficacité ; on admet que c'est le cas si l'efficacité est supérieure à 98 % ; c'est ce qu'on observe sauf pour l'essai n° 11.

Sur chantier, la mise en oeuvre de ces formules n'a présenté aucune difficulté, leur dispersion dans l'eau de mouillage se faisant sans problème. Le répandage des solutions aqueuses a pu être effectué à partir de répandeuses à liant, par la rampe de pulvérisation, à la lance, ou à partir de pulvérisateurs agricoles.

| ESSAI | | 1 | 2 | 3 | 4 | 5 | 6 | 7 | 8 | 9 | 10 | 11 |
|---|---|---|---|---|---|---|---|---|---|---|---|---|
| C18 amine | | 40 | 50 | 50 | 30 | 30 | 30 | 35 | 45 | 45 | 45 | 40 |
| acide acétique | | 8 | 11 | 15 | 8 | 5 | 5 | 5 | 10 | 10 | 10 | 6 |
| solvants | amine éthoxylée | (11 OE) 2,5 | | (11 OE) 10 | (11 OE) 5 | (15 OE) 5 | (15 OE) 5 | | | | (11 OE) 10 | (15 OE) 8 |
| | polyéthylène glycol | (PEG 200) 2,5 | (PEG 600) 5 | | | (PEG 600) 20 | (PEG 200) 20 | | (PEG 200) 5 | (PEG 400) 5 | | |
| | eau | 10 | 10 | | 15 | 40 | 40 | 30 | 15 | 15 | 10 | |
| | isopropanol | 37 | 24 | | 42 | | | 30 | 25 | 25 | 25 | 40 |
| Point de solidification | | 5° | 20° | 20° | 10° | 3° | 22° | 25° | 2° | 2° | 5° | 15° |
| Solubilité eau (1) | | ++ | + | ± | + | ++ | + | ± | ++ | ++ | ++ | ± |
| Viscosité des solutions aqueuses (2) | | ++ | + | + | ++ | ++ | ++ | + | ++ | ++ | ++ | ++ |

(1) solubilité
++ très bon
+ bon
± longue et difficile

(2) Viscosité :
++ faible
+ élevée

TABLEAU 1

| Essais \ Sols | 1 | 2 | 3 | 4 | 5 | 6 | 7 | 8 | 9 | 10 | 11 |
|---|---|---|---|---|---|---|---|---|---|---|---|
| Classe | Sable argileux | Sable argileux | Grave argileuse | Sable argileux | Sable argileux | Grave argileuse | Argile peu plastique | Limon très plastique | Sable argileux | Grave argileuse | sable |
| passant à 80 µm | 42% | | 14% | 46% | 30,5% | 10% | 95% | 85% | 40% | 23% | 4,7% |
| E.S. | 18 | | 35 | 12 | 37 | 43 | | | | 41 | 70 |
| Indice de plasticité | 10 | 13 | | 5 | 2,1 | | 11 | 22-26 | 9,9 | | |
| Résistance à sec kN | 6,9 | 3,3 | | 11,5 | 6,84 | 2,2 | 10 | 2,7 | 6,3 | 0,58 | |
| % d'hydrophobant | 2 | 2 | 1 | 1,5 | 1,5 | 1 | 2 | 1,5 | 1,5 | 0,25 | 1,5 |
| Coef. de diffusibilité témoin | $1,15.10^{-7}$ | $2,3.10^{-7}$ | $2,9.10^{-6}$ | $1,14.10^{-7}$ | $0,56.10^{-7}$ | $1,6.10^{-6}$ | $1,3.10^{-7}$ | $7.10^{-7}$ | $3,35.10^{-7}$ | $4,7.10^{-6}$ | $4,9.10^{-7}$ |
| Coef. de diffusibilité de sol traité | $9,77.10^{-11}$ | $5,1.10^{-10}$ | $6,7.10^{-12}$ | $1,65.10^{-10}$ | $0,91.10^{-9}$ | $6,9.10^{-10}$ | $1,1.10^{-9}$ | $6,6.10^{-9}$ | $1,6.10^{-10}$ | $9,1.10^{-8}$ | $1,7.10^{-8}$ |
| % d'efficacité | 99,91 | 99,78 | 100,00 | 99,85 | 98,37 | 99,96 | 99,15 | 99,06 | 99,95 | 98,70 | 96,53 |

TABLEAU 2

Revendications de brevet

1. Composition tensio-active liquide stable et autodispersible dans l'eau, à base d'une mono-amine en C8 à C22 salifiée par un acide, caractérisée en ce que la mono-amine est solubilisée dans un mélange d'au moins trois solvants appartenant chacun à un des quatre groupes de solvants suivants :

- mono-amines en C12 à C22 éthoxylées ou propoxylées ;

- polyéthylène glycols de poids moléculaire compris entre 200 et 600 ;

- alcools normaux ou iso du groupe des alcools méthylique, éthylique, propylique et butylique ;

- eau.

2. Composition selon la revendication 1 dans laquelle la mono-amine est une mono-amine en C16-C18.

3. Composition selon la revendication 1, caractérisée en ce que la mono-amine est salifiée par l'acide acétique ou l'acide chlorhydrique.

4. Composition selon la revendication 1, caractérisée en ce que la mono-amine salifiée représente 10 à 70 % en poids de la composition.

5. Composition selon la revendication 1, caractérisée en ce que la mono-amine éthoxylée ou propoxylée représente 0,1 à 10 % en poids de la composition.

6. Composition selon la revendication 1, caractérisée en ce que le polyéthylène glycol représente 2 à 20 % en poids de la composition.

7. Composition selon la revendication 1, caractérisée en ce que l'alcool représente 10 à 40 % en poids de la composition.

8. Composition selon la revendication 2 dans laquelle la mono-amine primaire est une mono-amine en C16-C18 sous forme d'acétate représentant 65 % de la formulation et les solvants sont :

- une mono-amine en C16-C18 éthoxylée à 15 moles d'oxyde d'éthylène représentant 10 % de la formulation ;

- de l'alcool isopropylique représentant 20 % de la formulation ;

- de l'eau représentant 5 % de la formulation.

9. Composition selon la revendication 2 dans laquelle la mono-amine est une mono-amine en C16-C18 sous forme d'acétate représentant 60 % de la formulation et les solvants sont :

- un polyéthylène glycol 400 représentant 5 % de la formulation ;

- de l'alcool isopropylique représentant 25 % de la formulation ;

- de l'eau représentant 10 % de la formulation.

10. Composition selon l'une quelconque des revendications 1 à 8 appliquée à l'hydrophobation de sols non revêtus.

0011515

Office européen des brevets

# RAPPORT DE RECHERCHE EUROPEENNE

Numéro de la demande
EP 79 40 0580

## DOCUMENTS CONSIDERES COMME PERTINENTS

| Catégorie | Citation du document avec indication, en cas de besoin, des parties pertinentes | Revendication concernee |
| --- | --- | --- |
| AD | FR - A - 1 195 349 (PROCHINOR)<br>---- | |
| X | Le présent rapport de recherche a ete etabli pour toutes les revendications | |

| Lieu de la recherche | Date d achevement de la recherche | Examinateur |
| --- | --- | --- |
| La Haye | 17-12-1979 | DECORTE |

OEB Form 1503.1 06.78

**CLASSEMENT DE LA DEMANDE (Int. Cl. 3)**

C 09 K 17/00
B 01 F 17/16
C 11 D 1/00

**DOMAINES TECHNIQUES RECHERCHES (Int. Cl. 3)**

C 09 K 17/00
B 01 F 17/16
E 01 C 7/36

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant